# EUROPEAN PATENT APPLICATION

(11) **EP 2 963 069 A1**
(43) Date of publication of application: **06.01.2016**
(21) Application number: 14753690.8
(22) Date of filing: 24.01.2014
(51) Int. Cl.: C08F 20/36, C07C 231/14, C07C 235/06, C08F 299/04, C08G 63/91

(54) **TERTIARY-NITROGEN-ATOM-CONTAINING LACTONE POLYMER HAVING POLYMERIZABLE GROUP, AND METHOD FOR PRODUCING SAME**

(30) Priority: 21.02.2013 JP 2013032540
(71) Applicant: Daicel Corporation, Osaka-shi, Osaka 530-0011 (JP)
(72) Inventor: HATANAKA, Shintarou, Ohtake-shi Hiroshima 739-0695 (JP); WATANABE, Jun, Ohtake-shi Hiroshima 739-0695 (JP)
(74) Representative: Grünecker Patent- und Rechtsanwälte PartG mbB
(86) International application number: PCT/JP2014/051483
(87) International publication number: WO 2014/129265

(57) **Abstract**

Provided is a novel lactone polymer containing a tertiary nitrogen atom and a polymerizable group. The lactone polymer is useful as a material monomer for various functional polymeric materials. The lactone polymer containing a tertiary nitrogen atom and a polymerizable group according to the present invention is obtained by allowing a compound (A) represented by Formula (1) to react with a polyisocyanate compound (B) and a hydroxy-containing (meth)acrylate compound (C), where Formula (1) is expressed as follows: 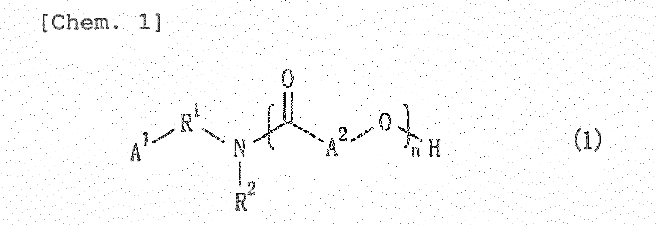 wherein R¹ typically represents a divalent hydrocarbon group; R² is selected typically from hydrogen and a hydrocarbon group; A¹ is selected from a nitrogen-containing heteroaromatic group and a group represented by one of Formulae (2) and (3): 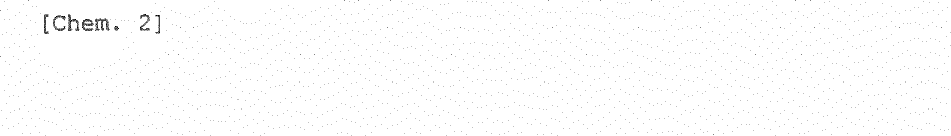 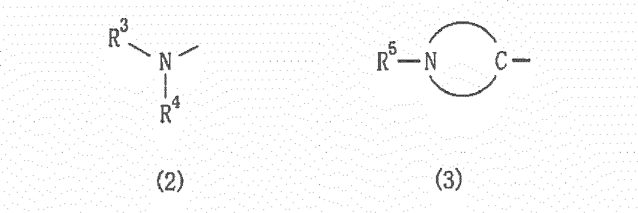 wherein R³ and R⁴ typically represent a hydrocarbon group; and R⁵ typically represents a hydrocarbon group; A² represents a C₂-C₉ straight or branched chain alkylene group; and n represents an integer of 1 to 50.

## Description

### Technical Field

The present invention relates to a lactone polymer containing a tertiary nitrogen atom and a polymerizable group, and a method for producing the lactone polymer; and to a curable composition containing the lactone polymer containing a tertiary nitrogen atom and a polymerizable group. The present invention also relates to a tertiary-nitrogen-containing lactone polymer that is an industrial product and is useful as a raw material for the lactone polymer containing a tertiary nitrogen atom and a polymerizable group, and a method for producing the tertiary-nitrogen-containing lactone polymer. The lactone polymer containing a tertiary nitrogen atom and a polymerizable group is useful as a material monomer for a variety of polymeric materials such as surfactants, dispersing agents, dispersion media, adhesives, coating agents, and cured resins.

### Background Art

Amino-containing lactone polymers have been used as materials that allow coating agents to have better pigment dispersibility and/or better adhesion to metals. For example, in known techniques, such an amino-containing lactone polymer is allowed to react directly with a resin to be incorporated into the resin, or the amino-containing lactone polymer is incorporated with a polymerizable double bond and is copolymerized with an acrylic monomer as another monomer. More specifically, a compound known as the amino-containing lactone polymer is obtained by subjecting an alkanolamine as a starting material to ring-opening addition polymerization with ε-caprolactone.

Independently, for example, Japanese Unexamined Patent Application Publication (JP-A) No. H04-149219 describes a method for introducing a polymerizable double bond into a terminus of an amino-containing lactone polymer and copolymerizing the resulting lactone polymer with an acrylic monomer as another monomer. According to this method, β-methyl-6-valerolactone is added to an alkanolamine (e.g., N,N-dimethylaminoethanol) to give an amino-containing polycaprolactone, and an acrylic group is introduced into the amino-containing polycaprolactone. This literature describes as follows. Assume that ε-caprolactone is added as a lactone to the alkanolamine as a starting material. In this case, the degree of polymerization of ε-caprolactone has to be increased so as to offer performance such as pigment dispersibility and pigment dispersion stability at higher levels. Disadvantageously, however, the resulting polymer tends to crystallize at a degree of ε-caprolactone polymerization of 3 to 5, or more, and becomes like a wax at a degree of ε-caprolactone polymerization of about 10, thus suffering from poor handleability. In addition, the polymer may possibly crystallize even when introduced into the target resin and may disadvantageously fail to contribute to desired performance.

Independently, Japanese Examined Patent Application Publication No. H03-12053 proposes a method of allowing ε-caprolactone to react with an organic diamine in the presence of a catalyst to give an amino-containing polycaprolactone polymer.

### Citation List

### Patent Literature

PTL 1: Japanese Unexamined Patent Application Publication No. H04-149219
PTL 2: Japanese Examined Patent Application Publication No. H03-12053

### Summary of Invention

### Technical Problem

As is described above, when ε-caprolactone subjected to addition polymerization, the resulting polymer is generally liable to crystallize at a high degree of ε-caprolactone polymerization. An ε-caprolactone-addition-polymerized polymer having a low degree of polymerization, if capable of being synthetically prepared, less undergoes crystallization and, when introduced into a resin, has a smaller possibility of crystallization. Assume that a ε-caprolactone-addition-polymerized polymer having a low degree of polymerization of 1 to about 2 is to be prepared. In this case, however, the ε-caprolactone-addition-polymerized polymer having a low degree of polymerization, even when introduced into a resin, may cause the resulting resin to have an odor peculiar to a raw material (unreacted initiator) and/or may cause the resin to have inferior performance such as pigment dispersibility and dispersion stability, because the raw material (unreacted initiator) generally remains in the product polymer.

The present invention has an object to provide a novel lactone polymer containing a tertiary nitrogen atom and a polymerizable group, where the lactone polymer is useful as a material monomer for a variety of functional polymeric materials and to provide a method for industrially efficiently producing the lactone polymer.

The present invention has another object to provide a curable composition containing the lactone polymer containing a tertiary nitrogen atom and a polymerizable group.

The present invention has yet another object to provide a tertiary-nitrogen-containing lactone polymer as an industrial product, where the lactone polymer is useful as a raw material for the lactone polymer containing a tertiary nitrogen atom and a polymerizable group.

The present invention has still another object to provide a method for efficiently producing the tertiary-nitrogen-containing lactone polymer, by which the amount of a residual unreacted raw material can be reduced.

### Solution to Problem

After intensive investigations to achieve the objects, the present inventors found that a lactone monomer, when allowed to react with an amine compound containing a tertiary nitrogen atom (e.g., a tertiary amine structure) and a primary or secondary amine structure in the molecule in the absence of a catalyst, can give a lactone adduct containing a tertiary nitrogen atom (nitrogen atom constituting a tertiary amine or nitrogen-containing heteroaromatic ring). The present inventors also found that the lactone adduct as synthesized has a very low content of residual raw material (unreacted amine compound) in spite of having a low degree of polymerization. The present inventors further found that the introduction of a polymerizable double bond into a terminus of the tertiary-nitrogen-containing lactone adduct as obtained by the reaction of the amine compound and the lactone monomer can give a tertiary-nitrogen-containing acrylic monomer. The present invention has been made based on these findings and further investigations.

Specifically, the present invention provides, in an embodiment, a lactone polymer containing a tertiary nitrogen atom and a polymerizable group. The lactone polymer is obtained by allowing a compound (A) represented by Formula (1) to react with a polyisocyanate compound (B) and a hydroxy-containing (meth)acrylate compound (C). Formula (1) is expressed as follows: 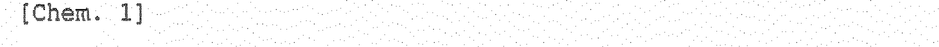 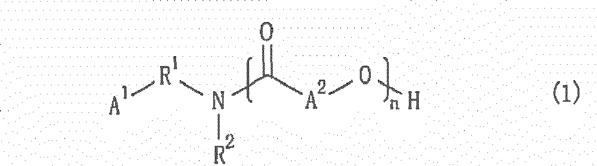 where R¹ represents an optionally substituted divalent hydrocarbon group. R² is selected from a hydrogen atom and an optionally substituted hydrocarbon group, where R² and a carbon atom constituting R¹ may be linked to each other to form a ring with the specified nitrogen atom. A¹ is selected from a nitrogen-containing heteroaromatic group and a group represented by one of Formulae (2) and (3): 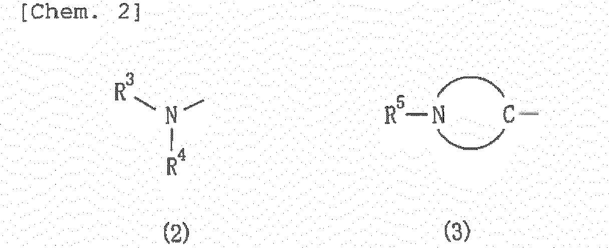 where R³ and R⁴ represent, identically or differently, an optionally substituted hydrocarbon group, where R³ and R⁴ may be linked to each other to form a ring with the adjacent nitrogen atom; and R⁵ represents an optionally substituted hydrocarbon group. A² represents a C₂-C₉ straight or branched chain alkylene group. The number n represents an integer of 1 to 50. When n is 2 or more, "n" occurrences of A² may be identical or different.

The present invention provides, in another embodiment, a lactone polymer containing a tertiary nitrogen atom and a polymerizable group. The lactone polymer is obtained by allowing a compound (A) represented by Formula (1) to react with a compound (D) containing a hydroxy-reactive functional group and a (meth)acryloyl group in the molecule. Formula (1) is expressed as follows: 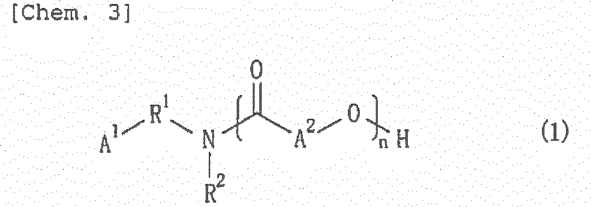 where R¹ represents an optionally substituted divalent hydrocarbon group. R² is selected from a hydrogen atom and an optionally substituted hydrocarbon group, where R² and a carbon atom constituting R¹ may be linked to each other to form a ring with the specified nitrogen atom. A¹ is selected from a nitrogen-containing heteroaromatic group and a group represented by one of Formulae (2) and (3): 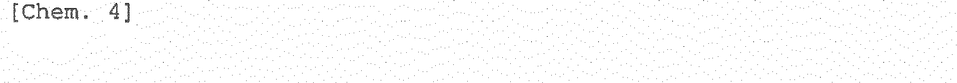 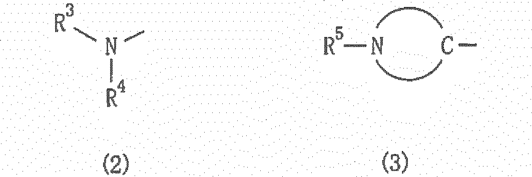 where R³ and R⁴ represent, identically or differently, an optionally substituted hydrocarbon group, where R³ and R⁴ may be linked to each other to form a ring with the adjacent nitrogen atom; and R⁵ represents an optionally substituted hydrocarbon group. A² represents a C₂-C₉ straight or branched chain alkylene group. The number n represents an integer of 1 to 50. When n is 2 or more, "n" occurrences of A² may be identical or different.

The compound (D) containing a hydroxy-reactive functional group and a (meth)acryloyl group in the molecule preferably includes a compound selected from the group consisting of (D1) a (meth)acryloyl halide, (D2) a (meth)acrylic ester, (D3) a (meth)acrylic anhydride, and (D4) a compound containing an isocyanate group and a (meth)acryloyloxy group in the molecule.

The present invention provides, in yet another embodiment, a method for producing a lactone polymer containing a tertiary nitrogen atom and a polymerizable group. The method includes allowing a compound (A) represented by Formula (1) to react with a polyisocyanate compound (B) and a hydroxy-containing (meth)acrylate compound (C). Formula (1) is expressed as follows: 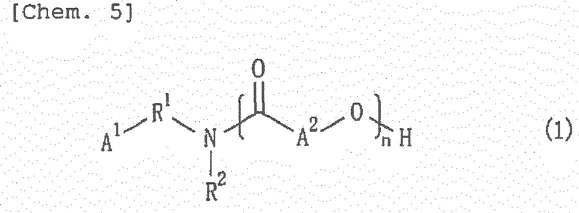 where R¹ represents an optionally substituted divalent hydrocarbon group. R² is selected from a hydrogen atom and an optionally substituted hydrocarbon group, where R² and a carbon atom constituting R¹ may be linked to each other to form a ring with the specified nitrogen atom. A¹ is selected from a nitrogen-containing heteroaromatic group and a group represented by one of Formulae (2) and (3): 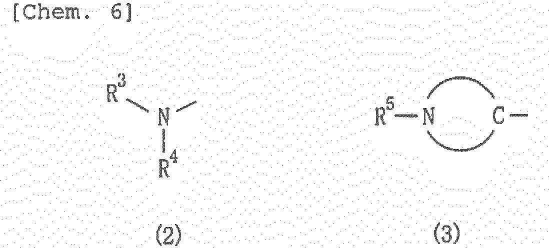 where R³ and R⁴ represent, identically or differently, an optionally substituted hydrocarbon group, where R³ and R⁴ may be linked to each other to form a ring with the adjacent nitrogen atom; and R⁵ represents an optionally substituted hydrocarbon group. A² represents a C₂-C₉ straight or branched chain alkylene group. The number n represents an integer of 1 to 50. When n is 2 or more, "n" occurrences of A² may be identical or different.

The present invention further provides, in another embodiment, a method for producing a lactone polymer containing a tertiary nitrogen atom and a polymerizable group. The method includes allowing a compound represented by Formula (1) to react with a compound (D) containing a hydroxy-reactive functional group and a (meth)acryloyl group in the molecule. Formula (1) is expressed as follows: 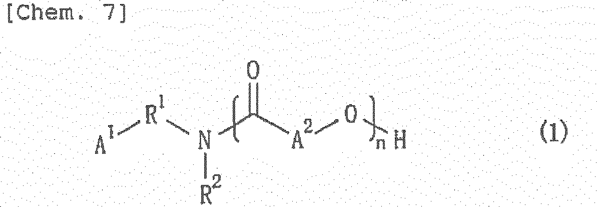 where R¹ represents an optionally substituted divalent hydrocarbon group. R² is selected from a hydrogen atom and an optionally substituted hydrocarbon group. R² and a carbon atom constituting R¹ may be linked to each other to form a ring with the specified nitrogen atom. A¹ is selected from a nitrogen-containing heteroaromatic group and a group represented by one of Formulae (2) and (3): 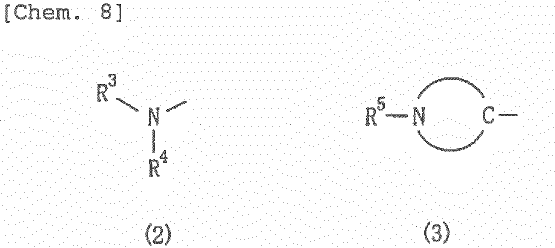 where R³ and R⁴ represent, identically or differently, an optionally substituted hydrocarbon group, where R³ and R⁴ may be linked to each other to form a ring with the adjacent nitrogen atom; and R⁵ represents an optionally substituted hydrocarbon group. A² represents, independently in each occurrence, a C₂-C₉ straight or branched chain alkylene group. The number n represents an integer of 1 to 50. When n is 2 or more, "n" occurrences of A² may be identical or different.

The present invention provides, in yet another embodiment, a curable composition containing the lactone polymer containing a tertiary nitrogen atom and a polymerizable group.

The curable composition preferably has a content of an amine compound or compounds excluding the lactone polymer containing a tertiary nitrogen atom and a polymerizable group of 10 percent by weight or less relative to the amount of the lactone polymer containing a tertiary nitrogen atom and a polymerizable group.

The present invention provides, in still another embodiment, a tertiary-nitrogen-containing lactone polymer as an industrial product. The lactone polymer is a tertiary-amine-terminated lactone polymer as an industrial product and includes 90 percent by weight or more of a compound (A) represented by Formula (1). The lactone polymer having a content of an amine compound represented by Formula (4) of 1 percent by weight or less, where the amine compound existing as an impurity. Formula (1) is expressed as follows: 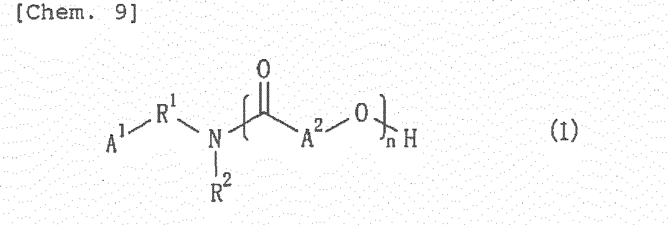 where R¹ represents an optionally substituted divalent hydrocarbon group. R² is selected from a hydrogen atom and an optionally substituted hydrocarbon group. R² and a carbon atom constituting R¹ may be linked to each other to form a ring with the specified nitrogen atom. A¹ is selected from a nitrogen-containing heteroaromatic group and a group represented by one of Formulae (2) and (3): 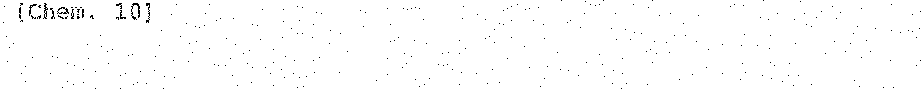 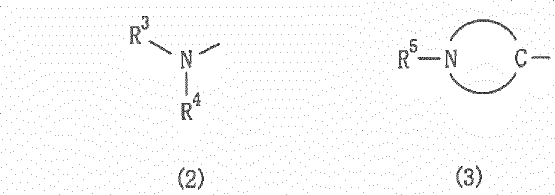 where R³ and R⁴ represent, identically or differently, an optionally substituted hydrocarbon group, where R³ and R⁹ may be linked to each other to form a ring with the adjacent nitrogen atom; and R⁵ represents an optionally substituted hydrocarbon group. A² represents, independently in each occurrence, a C₂-C₉ straight or branched chain alkylene group. The number n represents an integer of 1 to 50. When n is 2 or more, "n" occurrences of A² may be identical or different. Formula (4) is expressed as follows: 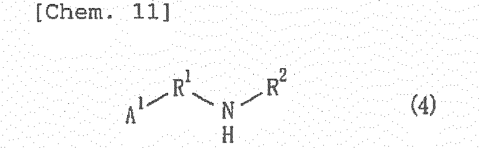 where R¹, R², and A¹ are as defined above.

The tertiary-nitrogen-containing lactone polymer as an industrial product is preferably liquid at 25°C.

In addition and advantageously, the present invention provides, in another embodiment, a method for producing a tertiary-nitrogen-containing lactone polymer. The method includes allowing an amine compound represented by Formula (4) to react with a lactone represented by Formula (5) in the absence of a catalyst to give a compound (A) represented by Formula (1). Formula (4) is expressed as follows: 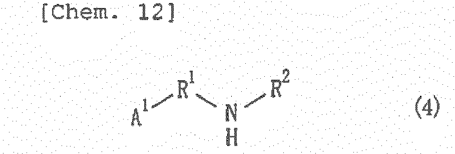 where R¹ represents an optionally substituted divalent hydrocarbon group. R² is selected from a hydrogen atom and an optionally substituted hydrocarbon group. R² and a carbon atom constituting R¹ may be linked to each other to form a ring with the specified nitrogen atom. A¹ is selected from a nitrogen-containing heteroaromatic group and a group represented by one of Formulae (2) and (3): 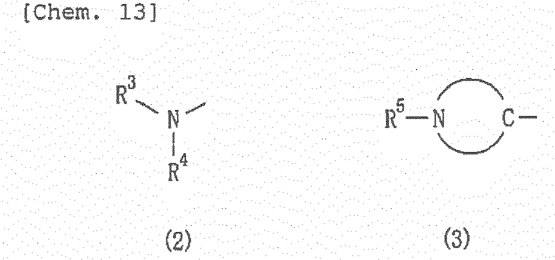 where R³ and R⁴ represent, identically or differently, an optionally substituted hydrocarbon group, where R³ and R⁴ may be linked to each other to form a ring with the adjacent nitrogen atom; and R⁵ represents an optionally substituted hydrocarbon group. Formula (5) is expressed as follows: 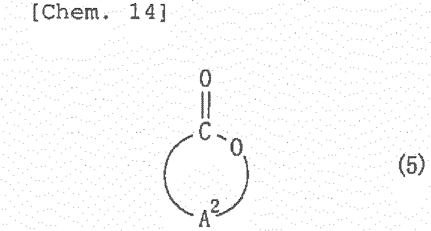 where A² represents a C₂-C₉ straight or branched chain alkylene group. Formula (1) is expressed as follows: 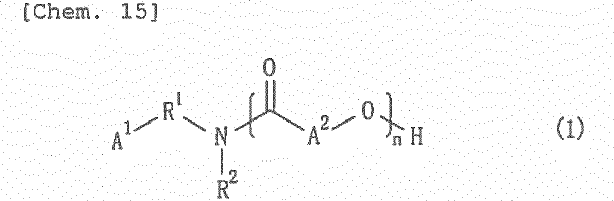 where R¹, R², A¹, and A² are as defined above. The number n represents an integer of 1 to 50. When n is 2 or more, "n" occurrences of A² may be identical or different. Advantageous Effects of Invention

The lactone polymers containing a tertiary nitrogen atom and a polymerizable group according to the present invention contain both a tertiary nitrogen atom and a (meth)acryloyl group in the molecule, where the tertiary nitrogen atom is a nitrogen atom constituting a tertiary amine or nitrogen-containing heteroaromatic ring. The lactone polymers, when used as a copolymerizable monomer, can be induced into and give polymers each containing a tertiary-nitrogen-containing group at a side chain terminus. The polymers of this type have satisfactory adhesion to pigments and/or metals, are highly dispersible, and have a high affinity for water interface. The polymers are therefore usable typically as or for surfactants, dispersing agents, dispersion media, adhesives, coating agents, and cured resins.

The methods for producing a lactone polymer containing a tertiary nitrogen atom and a polymerizable group according to the present invention can industrially efficiently produce the lactone polymers containing a tertiary nitrogen atom and a polymerizable group.

The tertiary-nitrogen-containing lactone polymer as an industrial product according to the present invention has a low content of an unreacted raw material (amine compound), less emits an unpleasant amine odor, and can be handled satisfactorily. In addition, the tertiary-nitrogen-containing lactone polymer does not adversely affect the properties and characteristics of products (e.g., polymeric materials) derived from the tertiary-nitrogen-containing lactone polymer.

The method for producing a tertiary-nitrogen-containing lactone polymer according to the present invention can give a tertiary-nitrogen-containing lactone polymer product that has a lower content of a residual amine compound (unreacted raw material) and less emits an unpleasant odor even when the resulting lactone polymer has a low degree of polymerization.

### Brief Description of Drawings

[Fig. 1] Fig. 1 is a chart illustrating the ¹H-NMR spectrum of a lactone polymer obtained in Example 1.
[Fig. 2] Fig. 2 is a chart illustrating the ¹H-NMR spectrum of a lactone polymer obtained in Comparative Example 1.

### Description of Embodiments

### Lactone Polymer Containing Tertiary Nitrogen Atom and Polymerizable Group

A first lactone polymer containing a tertiary nitrogen atom and a polymerizable group according to a first embodiment of the present invention is hereinafter also referred to as "lactone polymer 1 containing a tertiary nitrogen atom and a polymerizable group". The first lactone polymer is a polymerizably reactive compound obtained by allowing the compound (A) represented by Formula (1) to react with the polyisocyanate compound (B) and the hydroxy-containing (meth)acrylate compound (C). A second lactone polymer containing a tertiary nitrogen atom and a polymerizable group according to a second embodiment of the present invention is also referred to as "lactone polymer 2 containing a tertiary nitrogen atom and a polymerizable group". The second lactone polymer is a polymerizably reactive compound obtained by allowing the compound (A) represented by Formula (1) to react with the compound (D) containing a hydroxy-reactive functional group (functional group reactive with a hydroxy group) and a (meth)acryloyl group in the molecule.

The first lactone polymer containing a tertiary nitrogen atom and a polymerizable group and the second lactone polymer containing a tertiary nitrogen atom and a polymerizable group are compounds each commonly containing a structural moiety derived from the compound (A) represented by Formula (1) and further containing a terminal (meth)acryloyl group in the molecule. The compounds of this type contain a tertiary nitrogen atom (nitrogen atom constituting a tertiary amine or nitrogen-containing heteroaromatic ring) and a (meth)acryloyl group in the molecule. The compounds, when copolymerized with another monomer, can be induced into a polymer containing a tertiary-nitrogen-containing group at a side chain terminus. The resulting polymer has high adhesion to pigments and/or metals, is satisfactorily dispersible, has a high affinity for water interface, and is thereby usable as or for a variety of functional materials.

### Compound (A) Represented by Formula (1) (Tertiary-Nitrogen-Containing Lactone Polymer)

In Formula (1), R¹ represents an optionally substituted divalent hydrocarbon group. The divalent hydrocarbon group is exemplified by divalent aliphatic hydrocarbon groups including straight or branched chain alkylene groups such as methylene, ethylene, propylene, trimethylene, tetramethylene, pentamethylene, hexamethylene, octamethylene, and decamethylene groups, of which C₁-C₁₀ divalent aliphatic hydrocarbon groups are typified; divalent alicyclic hydrocarbon groups such as cyclopentylene, cyclopentylidene, cyclohexylene, and cyclohexylidene groups, of which C₃-C₁₂ divalent alicyclic hydrocarbon groups are typified; divalent aromatic hydrocarbon groups such as phenylene and naphthylene groups, of which C₆-C₁₄ divalent aromatic hydrocarbon groups are typified; and divalent groups each including two or more of these groups bonded to each other. Among them, C₁-C₁₀ straight or branched chain alkylene groups are preferred, of which C₁-C₆ straight or branched chain alkylene groups are particularly preferred.

The divalent hydrocarbon group may be substituted with one or more substituents. The substituents are exemplified by alkyl groups such as methyl, ethyl, propyl, isopropyl, butyl, isobutyl, and t-butyl groups, of which C₁-C₆ alkyl groups are typified; alkenyl groups such as allyl group, of which C₂-C₆ alkenyl groups are typified; cycloalkyl groups such as cyclopentyl and cyclohexyl groups, of which C₃-C₁₂ cycloalkyl groups are typified; aromatic hydrocarbon groups such as phenyl and naphthyl groups, of which C₆-C₁₄ aromatic hydrocarbon groups are typified; halogen atoms such as fluorine, chlorine, and bromine atoms; and alkoxy groups such as methoxy, ethoxy, and propoxy groups, of which C₁-C₆ alkoxy groups are typified.

In Formula (1), R² is selected from a hydrogen atom and an optionally substituted hydrocarbon group. The hydrocarbon group is exemplified by aliphatic hydrocarbon groups including straight or branched chain alkyl groups such as methyl, ethyl, propyl, isopropyl, butyl, isobutyl, s-butyl, t-butyl, pentyl, hexyl, octyl, and decyl groups, of which C₁-C₁₀ aliphatic hydrocarbon groups are typified; alicyclic hydrocarbon groups such as cyclopentyl and cyclohexyl groups, of which C₃-C₁₂ alicyclic hydrocarbon groups are typified; aromatic hydrocarbon groups such as phenyl and naphthyl groups, of which C₆-C₁₄ aromatic hydrocarbon groups are typified; and hydrocarbon groups each including two or more of these groups bonded to each other. In particular, R² is preferably selected from a hydrogen atom and a C₁-C₆ straight or branched chain alkyl group.

The hydrocarbon group as R² may have one or more substituents. The substituents are exemplified by halogen atoms such as fluorine, chlorine, and bromine atoms; and alkoxy groups such as methoxy, ethoxy, and propoxy groups, of which C₁-C₆ alkoxy groups are typified.

R² and a carbon atom constituting R¹ may be linked to each other to form a ring with the nitrogen atom adjacent to R¹ and R² [the nitrogen atom specified in Formula (1)]. The ring as above is exemplified by 3- to 6-membered nitrogen-containing heterocyclic rings such as pyrrolidine, piperazine, and morpholine rings.

In Formula (1), A¹ is selected from a nitrogen-containing heteroaromatic group and a group represented by one of Formulae (2) and (3).

In Formula (2), R³ and R⁴ represent, identically or differently, an optionally substituted hydrocarbon group. The optionally substituted hydrocarbon group as R³ and R⁴ is exemplified as with the optionally substituted hydrocarbon group as R².

R³ and R⁴ may be linked to each other to form a ring with the adjacent nitrogen atom. Such ring is exemplified by 3- to 6-membered nitrogen-containing heterocyclic rings such as pyrrolidine, piperazine, and morpholine rings.

In Formula (3), R⁵ represents an optionally substituted hydrocarbon group. The optionally substituted hydrocarbon group is exemplified as with the optionally substituted hydrocarbon group as R².

A "nitrogen-containing heteroaromatic ring" in the nitrogen-containing heteroaromatic group as A¹ is exemplified by pyridine, quinoline, isoquinoline, pyrazine, pyrimidine, pyridazine, and quinoxaline rings.

In Formula (1), A² represents, independently in each occurrence, a C₂-C₉ straight or branched chain alkylene group. The C₂-C₉ straight or branched chain alkylene group is exemplified by ethylene, propylene, trimethylene, tetramethylene, pentamethylene, 2-methyltetramethylene, hexamethylene, and octamethylene groups.

In Formula (1), n represents an integer of 1 to 50. When n is 2 or more, "n" occurrences of A² may be identical or different.

Each of different compounds may be used alone or in combination as the compound (A) represented by Formula (1).

The compound (A) represented by Formula (1) can be produced typically by allowing the amine compound represented by Formula (4) to react with (to be subjected to ring-opening addition polymerization with) the lactone represented by Formula (5) in the absence of, or in the presence of, a catalyst.

As used herein the term "lactone polymer" refers to and includes a lactone polymer of Formula (1) even in the case where n is 1, for the sake of convenience. R¹, R², and A¹ in Formula (4) and A² in Formula (5) are as defined above.

The amine compound represented by Formula (4) is a compound that contains, in the molecule, at least one tertiary nitrogen atom and at least one primary or secondary nitrogen atom. The tertiary nitrogen atom is a nitrogen atom constituting a tertiary amine or nitrogen-containing heteroaromatic ring. The primary or secondary nitrogen atom is a nitrogen atom constituting a primary amine or secondary amine.

The compound represented by Formula (4) is representatively exemplified by N,N-dimethyl-1,3-propanediamine [i.e., 3-(N,N-dimethylamino)propylamine], N,N-diethyl-1,3-propanediamine, N,N-dipropyl-1,3-propanediamine, N,N-dibutyl-1,3-propanediamine, N,N-dimethyl-1,2-ethanediamine, N,N-diethyl-1,2-ethanediamine, N,N-dimethyl-1,4-butanediamine, N,N-dimethyl-1,5-pentanediamine, N,N-dimethyl-1,6-hexanediamine, N,N-dimethyl-N'-methyl-1,3-propanediamine, 4-(3-aminopropyl)morpholine, 4-(2-aminoethyl)morpholine, 4-(3-aminopropyl)piperidine, 4-(2-aminoethyl)piperidine, 4-(3-aminopropyl)pyrrolidine, 4-(2-aminoethyl)pyrrolidine, 1-(3-aminopropyl)-4-methylpiperazine, 1-(2-aminoethyl)-4-methylpiperazine, 4-(3-aminopropyl)-1-methylpiperidine, 4-(2-aminoethyl)-1-methylpiperidine, 4-(N,N-dimethylamino)piperidine, 4-(N,N-dimethylaminomethyl)piperidine, 2-aminopyridine, 3-aminopyridine, 4-aminopyridine, 4-aminomethylpyridine, 4-(2-aminoethyl)pyridine, and 4-(3-aminopropyl)pyridine.

Each of different amine compounds may be used alone or in combination as the amine compound represented by Formula (4).

The lactone represented by Formula (5) is representatively exemplified by C₃-C₁₀ lactones such as β-propiolactone, 3-methyl-β-propiolactone, γ-butyrolactone (GBL), γ-valerolactone, δ-valerolactone, 3-methyl-δ-valerolactone, γ-caprolactone, 5-caprolactone, *ε-*caprolactone, 3-methyl-*ε*-caprolactone, 4-methyl-*ε-*caprolactone, and 3,3,5-trimethyl-ε-caprolactone. Of these lactones, preferred are C₄-C₈ lactones such as valerolactones and caprolactones, of which caprolactones such as *ε-*caprolactone are particularly preferred from the points typically of industrial availability and economic efficiency.

Each of different lactones may be used alone or in combination as the lactone represented by Formula (5).

The production method can efficiently produce a lactone polymer (polylactone) having a low degree of polymerization without a large amount of residual unreacted amine even when ε-caprolactone is used as the lactone compound.

The ratio between the amine compound represented by Formula (4) and the lactone represented by Formula (5) can be selected as appropriate according to the desired degree of polymerization of the compound (A) represented by Formula (1). The lactone represented by Formula (5) is generally used in an amount of typically 1 to 100 moles, preferably 1.5 to 100 moles, and more preferably 2 to 50 moles, per mole of the amine compound represented by Formula (4). For example, assume that a compound of Formula (1) in which n is 2 is to be produced; namely, a compound having a degree of lactone polymerization (number of moles of added lactone) of 2 is to be produced. In this case, the lactone represented by Formula (5) may be used in an amount of typically 1.5 to 2.5 moles, and preferably 1.75 to 2.25 moles, per mole of the amine compound represented by Formula (4).

The reaction may be performed in the presence of a catalyst, but is preferably performed in the absence of a catalyst. The reaction, when performed in the absence of a catalyst, can give a polylactone (lactone polymer) product that contains a smaller amount of the residual amine compound represented by Formula (4) (unreacted raw material) and less emits an unpleasant odor even when the lactone polymer is intended to have a low degree of polymerization. Typically, the reaction can give a tertiary-nitrogen-containing lactone polymer as an industrial product (polylactone product) that contains the compound (A) represented by Formula (1) in a content of typically 90 percent by weight or more, preferably 95 percent by weight or more, and more preferably 98 percent by weight or more, and has a content of the amine compound represented by Formula (4) of typically 1.0 percent by weight or less, preferably 0.5 percent by weight or less, and more preferably 0.2 percent by weight or less.

In the present invention, the tertiary-nitrogen-containing lactone polymer as an industrial product (polylactone product) is preferably liquid at 25°C. Typically, the tertiary-nitrogen-containing lactone polymer as an industrial product (polylactone product) may have a viscosity at 25°C of preferably 2000 mPa•s or less (e.g., 2000 to 20 mPa•s), more preferably 1000 to 50 mPa•s, and furthermore preferably 800 to 100 mPa•s.

The catalyst (polymerization catalyst), when used in the reaction, may be selected from known catalysts for use in lactone ring-opening polymerization. The catalyst usable herein is exemplified by a variety of organic or inorganic metallic compounds. Specifically, the catalyst usable from the point of reactivity is exemplified by organic titanium compounds including tetra-(C₁-C₆ alkyl) titanates such as tetraethyl titanate, tetraisopropyl titanate, and tetrabutyl titanate; organotin compounds such as dibutyltin oxide, dibutyltin laurate, stannous octoate, and mono-n-butyltin fatty acid salts; and halogenated tin compounds including stannous halides such as stannous chloride, stannous bromide, and stannous iodide. The catalyst as above may be used in an amount of typically about 0.1 to about 1000 ppm (by weight), preferably about 1 to about 500 ppm, and more preferably about 10 to about 300 ppm relative to the total amount of the raw materials [the total amount of the amine compound represented by Formula (4) and the lactone represented by Formula (5)]. The catalyst, if used in an excessively small amount, may fail to allow the reaction to proceed at a high reaction rate. In contrast, the catalyst, if used in an excessively large amount, may cause the formation of a larger amount of a by-product and may cause the target product to be readily colored, although allowing the reaction to proceed at a high reaction rate.

The catalyst is desirably not used in the present invention from the viewpoint of reducing the unreacted amine compound even at a low degree of polymerization, and, even if used, may be used in an amount of desirably less than 0.1 percent by weight, particularly desirably less than 0.05 percent by weight, and especially desirably less than 0.01 percent by weight, relative to the total amount of the amine compound represented by Formula (4) and the lactone represented by Formula (5).

The reaction between the amine compound represented by Formula (4) and the lactone represented by Formula (5) may be performed at a temperature of typically 50°C to 230°C, preferably 60°C to 200°C, and more preferably 75°C to 180°C. The reaction, if performed at an excessively low temperature, may proceed at a low reaction rate. In contrast, the reaction, if performed at an excessively high reaction temperature, may often cause side reactions other than the lactone addition reaction and may cause the target hydroxy-terminated polyester to be often produced in a lower yield. In addition, the reaction in this case may readily cause the target polymer to be colored. The side reactions are exemplified by lactone monomer decomposition in the lactone polymer; and the formation of a cyclic lactone dimer. The reaction may be performed for a reaction (stirring) time of typically about 1 to about 72 hours, preferably about 2 to about 48 hours, and more preferably about 3 to about 36 hours (e.g., about 5 to about 30 hours).

The reaction may also be performed at a reaction temperature that is changed stepwise. Typically, the reaction may be performed by allowing the materials to react at a temperature of 50°C to 140°C to an amine value of the reaction mixture of typically 250 KOH-mg/g or less, preferably 200 KOH-mg/g or less, and more preferably 170 KOH-mg/g or less, and thereafter allowing the reaction mixture to further react at a temperature of higher than 140°C to 230°C to a content of the lactone represented by Formula (5) of typically 3 percent by weight or less, preferably 1.5 percent by weight or less, and more preferably 1 percent by weight or less, based on the total amount of the reaction mixture. The reaction performed in this manner can efficiently give a polylactone having a desired degree of polymerization (in particular a polylactone having a low degree of polymerization) with a smaller amount of the unreacted amine compound represented by Formula (4).

The reaction (ring-opening addition polymerization) may be performed in the absence of, or in the presence of, a solvent. The reaction, when performed in the presence of a solvent, can effectively allow the system after the completion of the reaction to have a lower viscosity and enables easy temperature control during the reaction. The solvent for use herein is preferably selected from inert solvents devoid of active hydrogen, including hydrocarbons such as toluene and xylenes; and ketones such as methyl ethyl ketone and methyl isobutyl ketone. In contrast, ester-bond-containing solvents are not preferred. This is because these solvents, when used, undergo transesterification with the ester group of the material lactone during the reaction and may often cause the formation of by-products other than the tertiary-nitrogen-containing lactone polymer.

The reaction (ring-opening addition polymerization) is preferably performed in an inert atmosphere such as nitrogen atmosphere or argon atmosphere. The reaction, if performed in an air atmosphere, may readily cause the resulting tertiary-nitrogen-containing lactone polymer to be colored. The reaction can be performed by any system such as batch system, semi-batch system, or continuous system.

Where necessary, the reaction product after the completion of the reaction can be separated/purified by a separation/purification procedure such as filtration, concentration, distillation, extraction, crystallization, recrystallization, adsorption, or column chromatography, or a procedure as any combination of them.

The compound (A) represented by Formula (1) (tertiary-nitrogen-containing lactone polymer) can be obtained in the above manner. of the compounds (A) represented by Formula (1), preferred are those having an average number of moles of added lactone [average of "n" in Formula (1)] of 1 to 10, more preferably 1.2 to 5, and furthermore preferably 1.5 to 3. This is because such compounds (A), when derivatized to give a derivative or introduced into a resin, less cause the derivative or the resin to crystallize.

The compound (A) represented by Formula (1) (tertiary-nitrogen-containing lactone polymer) contains a tertiary nitrogen atom (nitrogen atom constituting a tertiary amine or nitrogen-containing heteroaromatic ring) in the molecule and, typically when introduced into a resin, can allow the resin to have better adhesion typically to pigments and/or metals, to be dispersible more satisfactorily, and to have a higher affinity for water interface. The tertiary amine structural moiety or the nitrogen-containing heteroaromatic structural moiety containing the tertiary nitrogen atom has a higher polarity (basicity) as compared with general organic structural moieties such as polycaprolactone moiety, and the high polarity contributes to a higher affinity typically for surfaces of pigments and metals, and for water interface. In addition, the amide bond present adjacent to a terminus [amide bond formed by the nitrogen atom bonded to R¹ and R² in Formula (4)] can also contribute to a higher polarity.

The compound (A) represented by Formula (1) (tertiary-nitrogen-containing lactone polymer) can be introduced into a resin by the use of the terminal hydroxy group. Typically, the compound (A) can be introduced into a resin by allowing the compound to react with a compound containing an epoxy group, an acid anhydride group, an isocyanate group, and/or a melamine structure. More specifically, assume that a polyurethane resin is produced from a multifunctional alcohol and a multifunctional isocyanate. In this case, the compound (A) represented by Formula (1) may be used in an appropriate amount (while adjusting the amount of the multifunctional isocyanate as needed) to give a polyurethane resin containing a tertiary amine structure and/or a nitrogen-containing heteroaromatic structure at a terminus.

Also assume that a polyacrylic polyol is synthetically prepared in advance by introducing hydroxy groups into a polyacrylate resin, and the resulting polyacrylic polyol is subjected to a reaction with a curing agent to give a cured resin, where the curing agent is generally exemplified by multifunctional isocyanates and melamines. In this case, the compound (A) represented by Formula (1) may be added to the reaction system in an appropriate amount, or may be previously added to the curing agent. This can give a polyacrylate resin containing a tertiary amine structure and/or a nitrogen-containing heteroaromatic structure at a terminus.

Further assume that an epoxy resin is produced by curing an epoxy compound, where a curing agent such as an acid anhydride may be used. In this case, the compound (A) represented by Formula (1) may be used in an appropriate amount while adjusting the amount of the curing agent as needed. This can give an epoxy compound containing a tertiary amine structure and/or a nitrogen-containing heteroaromatic structure at a terminus.

An aliphatic amine is often used as a curing catalyst. The curing reaction using the compound (A) represented by Formula (1), however, can be performed using a smaller amount of the aliphatic amine as the catalyst, or can be performed in the absence of such catalyst. This can solve problems due typically to volatile components that can be formed as a result of a residual lower-molecular-weight compound and/or due to weight weight loss.

The resin (polymeric material) into which the compound (A) represented by Formula (1) has been introduced in the above manner may be used in or for surfactants; dispersing agents for the dispersion of pigments and/or metals; dispersion media in which pigments and/or metals are to be dispersed; adhesives having better adhesion; coating agents; and cured resins. The introduction of the compound (A) represented by Formula (1) allow these dispersing agents, dispersion media, adhesives, coating agents, and cured resins to contain none or a minimized amount of a low-molecular-weight amine catalyst.

In addition, the compound (A) represented by Formula (1) (tertiary-nitrogen-containing lactone polymer) may be used as a raw material to form the lactone polymer containing a tertiary nitrogen atom and a polymerizable group according to the present invention, as described above.

### Polyisocyanate Compound (B)

The polyisocyanate compound (B) for use in the present invention can be any compound as long as containing two or more isocyanate groups per molecule. Such polyisocyanate compounds usable herein are exemplified by known polyisocyanates including aromatic polyisocyanates, aliphatic polyisocyanates, and alicyclic polyisocyanates; and, of these polyisocyanates, mixtures, adducts (e.g., adducts between a polyisocyanate and a low-molecular-weight polyhydric alcohol, and adducts between a polyisocyanate and a polyamine), modified products, and polymerized products.

Specifically, the polyisocyanate compound (B) is exemplified by aromatic diisocyanates such as tolylene diisocyanates (TDIs) (e.g., 2,4-tolylene diisocyanate (2,4-TDI) and 2,6-tolylene diisocyanate (2,6-TDI)), diphenylmethane diisocyanates (MDIs) (e.g., 4,4'-diphenylmethane diisocyanate (4,4'-MDI) and 2,4'-diphenylmethane diisocyanate (2,4'-MDI)), phenylene diisocyanates (e.g., 1,4-phenylene diisocyanate), xylylene diisocyanates (XDIs), tetramethylxylylene diisocyanates (TMXDIs), tolidine diisocyanates (TODIs), 1,5-naphthalene diisocyanate (NDI), polymethylene-polyphenylene polyisocyanates, tetramethylxylylene diisocyanates (TMXDIs), and triphenylmethane triisocyanate; aliphatic diisocyanates such as hexamethylene diisocyanate (HDI), trimethylhexamethylene diisocyanate (TMHDI), lysine diisocyanate, and bis(isocyanatomethyl)norbornane (norbornane diisocyanate; NBDI); alicyclic polyisocyanates such as trans-cyclohexane-1,4-diisocyanate, isophorone diisocyanate (IPDI), bis(isocyanatomethyl)cyclohexanes (H6XDIs; hydrogenated XDIs), dicyclohexylmethane diisocyanates (H12MDIs; hydrogenated MDIs), and H6TDIs (hydrogenated TDIs); and carbodiimide-modified polyisocyanates derived from them; and isocyanurate-modified polyisocyanates derived from them.

The polyisocyanate compound (B) for use herein may also be selected from trimers of the above-mentioned diisocyanate compounds. Specifically, compounds of this type are exemplified by isocyanurate-form polyisocyanates such as isocyanurate trimer of IPDI, isocyanurate trimer of HDI, isocyanurate trimer of TDI, and mixed isocyanurate trimer of HDI and TDI.

### Hydroxy-Containing (Meth)acrylate Compound (C)

The hydroxy-containing (meth)acrylate compound (C) for use in the present invention has only to be a (meth)acrylic ester compound containing at least one hydroxy group in the molecule and is exemplified by 2-hydroxyethyl (meth)acrylate, 2-hydroxypropyl (meth)acrylate, 4-hydroxybutyl (meth)acrylate, caprolactone-modified hydroxyalkyl (meth)acrylate (e.g., caprolactone-modified 2-hydroxyethyl (meth)acrylate); partial (meth)acrylates of polyhydric alcohols, such as tripropylene glycol (meth)acrylate, glycerol mono(meth)acrylate, glycerol di(meth)acrylate, glycerol methacrylate acrylate, and caprolactone-modified derivatives of them.

### Production of Lactone Polymer 1 Containing Tertiary Nitrogen Atom and Polymerizable Group

The lactone polymer 1 containing a tertiary nitrogen atom and a polymerizable group can be produced by allowing the compound (A) represented by Formula (1) to react with the polyisocyanate compound (B) and the hydroxy-containing (meth)acrylate compound (C).

The order of reaction may be as follows. The reaction may be performed by initially allowing the compound (A) represented by Formula (1) to react with the polyisocyanate compound (B) to give a reaction product, and allowing the reaction product to react with the hydroxy-containing (meth)acrylate compound (C). Conversely, the reactions may also be performed by initially allowing the polyisocyanate compound (B) and the hydroxy-containing (meth)acrylate compound (C) to react with each other to give a reaction product, and allowing the reaction product to react with the compound (A) represented by Formula (1).

The components are preferably used in such proportions that the total number of moles of hydroxy group(s) of the compound (A) represented by Formula (1) and hydroxy group(s) of the hydroxy-containing (meth)acrylate compound (C) is about 1.0 to about 1.2 times the number of moles of isocyanate groups of the polyisocyanate compound (B).

The ratio (molar ratio) of the compound (A) represented by Formula (1) to the hydroxy-containing (meth)acrylate compound (C) is typically 1:9 to 9:1, preferably 3:7 to 7:3, and more preferably 4:6 to 6:4.

The reaction may be performed either in the presence of, or in the absence of a solvent. The solvent for use herein is preferably selected from inert solvents devoid of active hydrogen. Such solvents are exemplified by hydrocarbons such as toluene and xylenes; ketones such as methyl ethyl ketone and methyl isobutyl ketone; and nitriles such as acetonitrile.

The reaction may employ a catalyst so as to accelerate the reaction rate. The catalyst for use herein is exemplified by urethanization catalysts such as dibutyltin dilaurate, tin octoate, and tin chloride. The catalyst may be used in an amount of typically about 0.1 to about 1000 ppm (by weight), preferably about 1 to about 500 ppm, and more preferably about 10 to about 300 ppm, relative to the total amount of raw materials, i.e., the total amount of the compound (A) represented by Formula (1), the polyisocyanate compound (B), and the hydroxy-containing (meth)acrylate compound (C). The catalyst, if used in in an excessively small amount, may fail to allow the reaction to proceed at a high reaction rate. In contrast, the catalyst, if used in an excessively large amount, may adversely affect the properties of the product.

The reaction may also employ a polymerization inhibitor so as to inhibit polymerization during the reaction. The polymerization inhibitor is exemplified by phenols such as hydroquinone, hydroquinone monomethyl ether, tert-butylhydroquinone, catechol, and p-tert-butylcatechol; quinones such as benzoquinones and 2,5-diphenyl-p-benzoquinone; nitro compounds or nitroso compounds, such as nitrobenzene, m-dinitrobenzene, and 2-methyl-2-nitrosopropane; and sulfides such as dithiobenzoyl sulfide. The polymerization inhibitor as above may be used in an amount of typically about 0.1 to about 1000 ppm (by weight), preferably about 1 to about 500 ppm, and more preferably about 10 to about 300 ppm, relative to the amount of the hydroxy-containing (meth)acrylate compound (C).

The reaction may be performed at a temperature of typically 40°C to 130°C, and preferably 50°C to 100°C. The reaction, if performed at an excessively high temperature, may fail to proceed at a practically sufficient reaction rate. The reaction, if performed at an excessively high temperature, may cause a side reaction. The reaction may be generally performed until the concentration of residual NCO in the reaction mixture (reaction liquid) reaches 0.1 percent by weight or less. The residual NCO concentration can be measured by a known method such as gas chromatography or titrimetry. The reaction may be performed by any system such as batch system, semi-batch system, or continuous system.

The reaction product after the completion of the reaction can be separated/purified as needed by a separation/purification procedure such as filtration, concentration, distillation, extraction, crystallization, recrystallization, adsorption, or column chromatography, or a procedure as any combination of them.

### Compound (D) Containing Hydroxy-Reactive Functional Group and (Meth)acryloyl Group in Molecule

The compound (D) containing a hydroxy-reactive functional group and a (meth)acryloyl group in the molecule for use in the present invention may be selected typically from (D1) (meth)acryloyl halides, (D2) (meth)acrylic esters, (D3) (meth)acrylic anhydrides, and (D4) compounds each containing an isocyanate group and a (meth)acryloyloxy group in the molecule.

The (meth)acryloyl halides (D1) are exemplified by (meth)acryloyl chloride and (meth)acryloyl bromide. The (meth)acrylic esters (D2) are exemplified by C₁-C₁₀ alkyl (meth)acrylates such as methyl (meth)acrylate, ethyl (meth)acrylate, propyl (meth)acrylate, isopropyl (meth)acrylate, t-butyl (meth)acrylate, and butyl (meth)acrylate; C₆-C₁₅ aryl (meth)acrylates such as phenyl (meth)acrylate; and C₇-C₁₆ aralkyl (meth)acrylates such as benzyl (meth)acrylate. The (meth)acrylic anhydrides (D3) are exemplified by acrylic anhydride and methacrylic anhydride.

The compounds (D4) each containing an isocyanate group and a (meth)acryloyloxy group in the molecule is exemplified by (meth)acryloyloxyalkyl isocyanates such as 2-(meth)acryloyloxyethyl isocyanate, 3-(meth)acryloyloxypropyl isocyanate, and 4-(meth)acryloyloxybutyl isocyanate.

### Production of Lactone Polymer 2 Containing Tertiary Nitrogen Atom and Polymerizable Group

The lactone polymer 2 containing a tertiary nitrogen atom and a polymerizable group can be produced by allowing the compound (A) represented by Formula (1) to react with the compound (D) containing a hydroxy-reactive functional group and a (meth)acryloyl group in the molecule.

The compound (D) may be used in an amount of typically 0.9 to 2 moles, and preferably 1 to 1.5 moles, per mole of the compound (A) represented by Formula (1), while the amount may vary depending on the type of the compound (D).

The reaction may be performed either in the presence of, or in the absence of a solvent. The solvent for use herein is preferably selected from inert solvents devoid of active hydrogen. Such solvents are exemplified by hydrocarbons such as toluene and xylenes; ketones such as methyl ethyl ketone and methyl isobutyl ketone; and nitriles such as acetonitrile.

When a (meth)acryloyl halide (D1) is used as the compound (D), the system may include a base. The base is exemplified by tertiary amines such as triethylamine, nitrogen-containing heteroaromatic compounds such as pyridine; and inorganic bases. The base may be used in an amount of typically about 1 to about 2 moles, and preferably about 1 to about 1.5 moles, per mole of the (meth)acryloyl halide (D1).

When a compound (D4) containing an isocyanate group and a (meth)acryloyloxy group in the molecule is used as the compound (D), the system may further include a catalyst. The catalyst usable herein is exemplified by urethanization catalysts such as dibutyltin dilaurate, tin octoate, and tin chloride. The catalyst may be used in an amount of typically about 0.1 to about 1000 ppm (by weight), preferably about 1 to about 500 ppm, and more preferably about 10 to about 300 ppm, relative to the total amount of the raw materials, i.e., the total amount of the compound (A) represented by Formula (1) and the compound (D4). The catalyst, if used in an excessively small amount, may fail to allow the reaction to proceed at a high reaction rate. In contrast, the catalyst, if used in an excessively large amount, may adversely affect the properties of the product.

The reaction between the compound (A) represented by Formula (1) and the compound (D) may be performed in the presence of a polymerization inhibitor added to the system, so as to prevent polymerization. The polymerization inhibitor is exemplified as above. The polymerization inhibitor may be used in an amount of typically about 0.1 to about 1000 ppm (by weight), preferably about 1 to about 500 ppm, and more preferably about 10 to about 300 ppm, relative to the amount of the compound (D).

The reaction may be performed at a temperature generally in the range of -10°C to 150°C, while the temperature can be selected as appropriate according to the type of the compound (D). The reaction, if performed at an excessively low temperature, may fail to proceed at a practically sufficient reaction rate; and, if performed at an excessively high temperature, may cause a side reaction. The reaction may be performed by any system such as batch system, semi-batch system, or continuous system.

The reaction product after the completion of the reaction can be separated/purified as needed by a separation/purification procedure such as filtration, concentration, distillation, extraction, crystallization, recrystallization, adsorption, or column chromatography, or a procedure as any combination of them.

### Curable Composition Containing Lactone Polymer Containing Tertiary Nitrogen Atom and Polymerizable Group

The lactone polymers containing a tertiary nitrogen atom and a polymerizable group according to the present invention contain both a tertiary nitrogen atom (nitrogen atom constituting a tertiary amine or nitrogen-containing heteroaromatic ring) and a (meth)acryloyl group in the molecule. The lactone polymers, when being copolymerized with another monomer, can each be induced into a polymer containing a tertiary-nitrogen-containing group at a side chain terminus, such as an acrylic resin. The other monomer is exemplified by acrylic monomers; and monomers copolymerizable with acrylic monomers. The resulting polymer (resin) obtained in this manner has high adhesion to pigments and/or metals, is satisfactorily dispersible, and has a high affinity for water interface. The polymer is therefore usable as or for a variety of functional materials such as surfactants, dispersing agents, dispersion media, adhesives, coating agents, and cured resins.

Assume that a tertiary-nitrogen-containing lactone polymer is produced by the production method according to the present invention (the method not using a catalyst); the tertiary-nitrogen-containing lactone polymer is used as a raw material to synthesize a lactone polymer containing a tertiary nitrogen atom and a polymerizable group; and the resulting lactone polymer is induced into a resin. In this case, the resin does not have an amine odor derived from the raw material and develops desired properties even when the lactone polymer as used has a low degree of lactone polymerization so as to prevent crystallization.

The curable composition according to the present invention contains the lactone polymer containing a tertiary nitrogen atom and a polymerizable group according to the present invention. The curable composition may further contain one or more other components as needed. Such other components are exemplified by monomers including radically polymerizable monomers such as acrylic monomers, and monomers copolymerizable with the acrylic monomers; polymers (resins); curing catalysts; curing agents; curing accelerators; organic solvents; and a variety of additives such as antioxidants, pigments, dyestuffs, thickeners, fillers, and surfactants.

The organic solvents are exemplified by ketone solvents such as acetone, methyl ethyl ketone, and cyclohexanone; ester solvents such as methyl acetate, ethyl acetate, butyl acetate, and methoxyethyl acetate; ether solvents such as diethyl ether, ethylene glycol methyl ether, and dioxane; aromatic hydrocarbon solvents such as toluene and xylenes; aliphatic hydrocarbon solvents such as pentane and hexane; halogen-containing solvents such as methylene chloride, chlorobenzene, and chloroform; and alcohol solvents such as isopropyl alcohol and butanol. The organic solvent(s) as above may be blended in an amount of preferably 0 to 30 percent by weight based on the total amount of the composition.

The lactone polymers containing a tertiary nitrogen atom and a polymerizable group according to the present invention each contain the tertiary nitrogen atom (nitrogen atom constituting a tertiary amine or nitrogen-containing heteroaromatic ring). The lactone polymers thus develop a function or functions as with a tertiary amine or a nitrogen-containing heteroaromatic compound, even when using no extra component. The extra component is exemplified by other tertiary amines such as low-molecular-weight tertiary amines that are volatile. Accordingly, the curable composition according to the present invention can have a content of an amine compound or compounds other than the lactone polymer(s) containing a tertiary nitrogen atom and a polymerizable group of 10 percent by weight or less, preferably 5 percent by weight or less, and more preferably 1 percent by weight or less, relative to the amount of the lactone polymer(s) containing a tertiary nitrogen atom and a polymerizable group.

### Examples

The present invention will be illustrated in further detail with reference to several examples below. It should be noted, however, that the examples are by no means intended to limit the scope of the present invention.

### Example 1: Synthesis of polymer (tertiary-nitrogen-containing lactone polymer) by lactone ring-opening addition polymerization of 3-(N,N-dimethylamino)propylamine

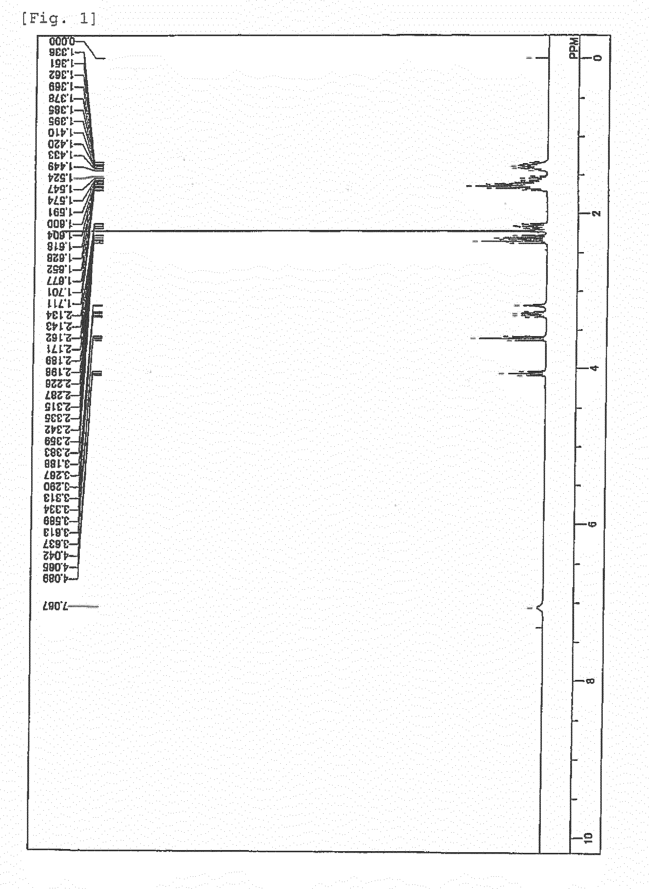

Materials, i.e., 123.68 g (1.21 mol) of 3-(N,N-dimethylamino)propylamine and 276.32 g (2.42 mol) [2 moles per mole of 3-(N,N-dimethylamino)propylamine] of *ε-*caprolactone were placed in a four-neck separable flask equipped with a stirrer, a thermometer, a nitrogen gas inlet tube, and a condenser and were allowed to react with each other at 120°C until the reaction liquid had an amine value of 170 KOH-mg/g. The reaction liquid was then raised in temperature to 160°C, allowed to react until the residual *ε-*caprolactone content reached less than 1 percent by weight based on the total amount of the reaction liquid, where the content was determined by GC analysis, and yielded a lactone polymer (tertiary-nitrogen-containing lactone polymer) that was liquid at room temperature (25°C). The reaction liquid had a content of residual 3-(N,N-dimethylamino)propylamine of 0.1 percent by weight or less based on the total amount of the reaction liquid. Two moles on average of *ε-*caprolactone were added per mole of 3-(N,N-dimethylamino)propylamine. Fig. 1 depicts the ¹H-NMR spectrum (solvent: deuterated chloroform) of the obtained lactone polymer.

### Comparative Example 1: Synthesis of polymer by lactone ring-opening addition polymerization of 2-(N,N-dimethylamino)ethanol

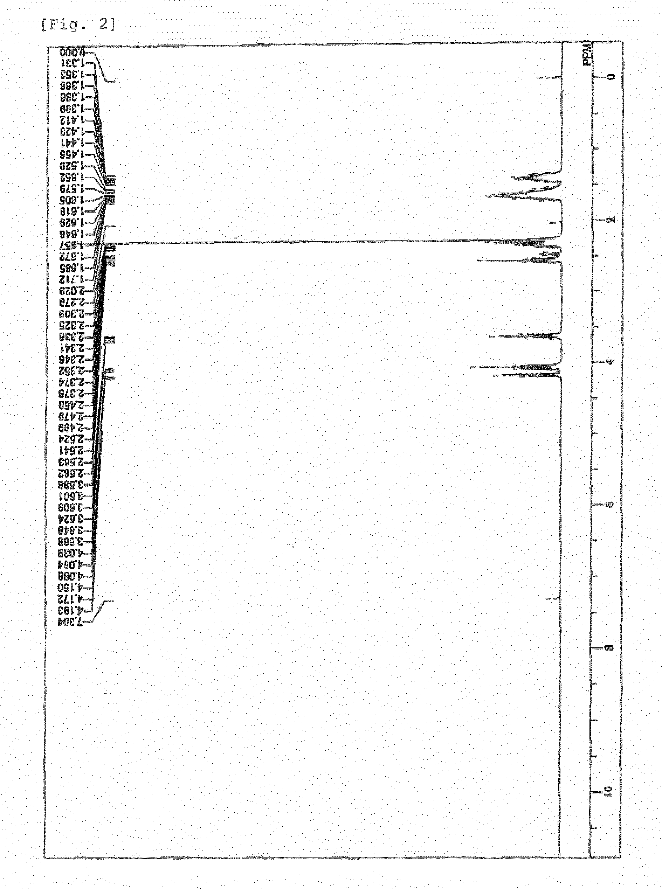

Materials, i.e., 112.33 g of 2-(N,N-dimethylamino)ethanol and 286.67 g [2 moles per mole of 2-(N,N-dimethylamino)ethanol] of ε-caprolactone were placed in a four-neck separable flask equipped with a stirrer, a thermometer, a nitrogen gas inlet tube, and a condenser and were allowed to react with each other at 80°C for 15 hours and to further react at 160°C for 18 hours, and yielded a lactone polymer that was liquid at room temperature (25°C). The lactone polymer was analyzed by NMR to find that 19 percent by weight (based on the total amount of the reaction liquid) of 2-(N,N-dimethylamino)ethanol remained, and that 2.8 moles on average of ε-caprolactone were added per mole of 2-(N,N-dimethylamino)ethanol. Fig. 2 depicts the ¹H-NMR spectrum (solvent: deuterated chloroform) of the resulting lactone polymer.

### Example 2: Synthesis 1 of polymerizably reactive polylactone compound

Materials were prepared as 26.89 g of isocyanurate trimer of HDI (trade name "TAKENATE D-170N", supplied by MITSUI TAKEDA CHEMICALS,INC., having an NCO concentration in percentage of 20.1%) and 14.18 g of the tertiary-nitrogen-containing lactone polymer synthesized in Example 1, 0.050 g of methoquinone, and 0.020 g of dibutyltin dilaurate (DBTDL) (trade name NEOSTANN U-100, supplied by Nitto Kasei Co., Ltd.). The materials were placed in a four-neck separable flask equipped with a stirrer, a thermometer, an air-gas mixture inlet tube, and a condenser. After the reaction system internal temperature was adjusted to 70°C, 58.93 g of an *ε*-caprolactone-modified acrylate monomer (trade name "PLACCEL FA5", supplied by Daicel Corporation) were added at the time point when the residual isocyanate group concentration reached 1.7 percent by weight based on the total amount of the reaction liquid. The reaction was further performed until the residual isocyanate group concentration reached 0.1 percent by weight or less based on the total amount of the reaction liquid, and yielded a polymerizably reactive polylactone compound (urethane acrylate).

### Example 3: Synthesis 2 of polymerizably reactive polylactone compound

A glass reactor equipped with a stirrer, a condenser, a thermometer, and a dropping funnel was purged with nitrogen and charged with 42.4 g (0.12 mol) of the tertiary-nitrogen-containing lactone polymer synthesized in Example 1, 90 g of acetonitrile, and 19.4 g (0.19 mol) of triethylamine. The mixture in the reactor was cooled down to 2°C with stirring on an ice bath and further combined with 18.8 g (0.18 mol) of methacryloyl chloride added dropwise from the dropping funnel over 30 minutes. After the completion of the dropwise addition, the mixture was stirred while maintaining the liquid temperature at 5°C until the disappearance of hydroxy group was verified in NMR analysis. The reaction liquid was combined with 90 g of toluene and then combined with 90 g of water over 30 minutes while being cooled on ice to maintain the liquid temperature at 15°C or lower. An organic layer was separated, combined with 0.4 g of methoquinone, concentrated in a vacuum, further distilled under reduced pressure, and thereby yielded a product derived from the tertiary-nitrogen-containing lactone polymer obtained in Example 1, except with an acryloyl group being introduced.

### Example 4: Synthesis 3 of polymerizably reactive polylactone compound

Materials were prepared as 437 g of toluene as a diluent, 33.0 g (0.10 mol) of the tertiary-nitrogen-containing lactone polymer synthesized in Example 1, 0.05 g of methoquinone as a polymerization inhibitor, and 0.05 g of dibutyltin dilaurate as a reaction catalyst. The materials were placed in a 1-L flask equipped with a stirrer and a reflux condenser and were mixed with stirring, and the temperature of which was adjusted to 25°C. Next, the mixture was further combined with 15.5 g (0.10 mol) of 2-methacryloyloxyethyl isocyanate (Karenz MOI supplied by Showa Denko K.K.) as a (meth)acryloyl-containing isocyanate compound, allowed to react at a temperature of 80°C for 24 hours, and yielded a product derived from the tertiary-nitrogen-containing lactone polymer synthesized in Example 1, except with an acryloyl group being introduced. The end point of the reaction was determined by measuring the NCO concentration (%).

### Industrial Applicability

The lactone polymers containing both a tertiary nitrogen atom and a polymerizable group according to the present invention are useful typically as or for surfactants, dispersing agents, dispersion media, adhesives, coating agents, and cured resins.

## Claims

1. A lactone polymer comprising a tertiary nitrogen atom and a polymerizable group, the lactone polymer obtained by allowing a compound (A) represented by Formula (1) to react with a polyisocyanate compound (B) and a hydroxy-containing (meth)acrylate compound (C), Formula (1) expressed as follows: 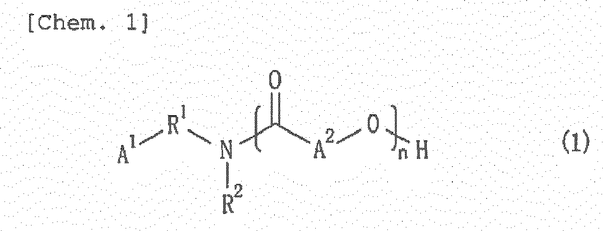 wherein:
R¹ represents an optionally substituted divalent hydrocarbon group;
R² is selected from a hydrogen atom and an optionally substituted hydrocarbon group, where R² and a carbon atom constituting R¹ may be linked to each other to form a ring with a nitrogen atom specified in the formula;
A¹ is selected from nitrogen-containing heteroaromatic group, a group represented by Formula (2), and a group represented by Formula (3): 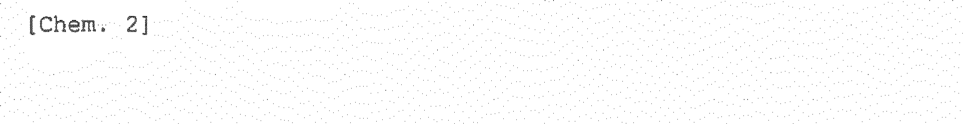 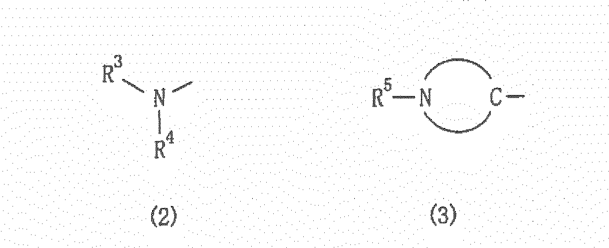 wherein:
R³ and R⁴ represent, identically or differently, an optionally substituted hydrocarbon group, where R³ and R⁴ may be linked to each other to form a ring with an adjacent nitrogen atom; and
R⁵ represents an optionally substituted hydrocarbon group;
A² represents, independently in each occurrence, a C₂-C₉ straight or branched chain alkylene group; and
n represents an integer of 1 to 50,
where, when n is 2 or more, "n" occurrences of A² may be identical or different.

2. A lactone polymer comprising a tertiary nitrogen atom and a polymerizable group, the lactone polymer obtained by allowing a compound (A) represented by Formula (1) to react with a compound (D) comprising a hydroxy-reactive functional group and a (meth)acryloyl group in a molecule, Formula (1) expressed as follows: 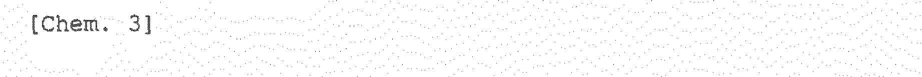 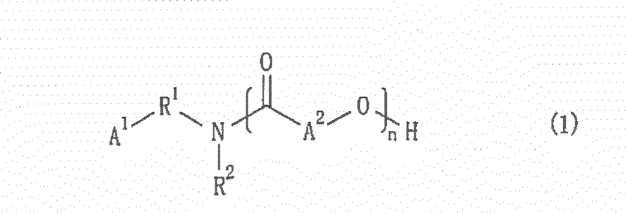 wherein:
R¹ represents an optionally substituted divalent hydrocarbon group;
R² is selected from a hydrogen atom and an optionally substituted hydrocarbon group, where R² and a carbon atom constituting R¹ may be linked to each other to form a ring with a nitrogen atom specified in the formula;
A¹ is selected from a nitrogen-containing heteroaromatic group and a group represented by one of Formulae (2) and (3) : 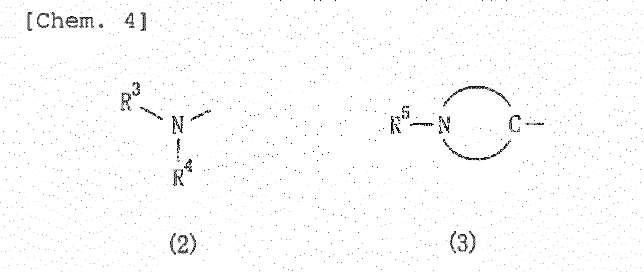 wherein:
R³ and R⁴ represent, identically or differently, an optionally substituted hydrocarbon group, where R³ and R⁴ may be linked to each other to form a ring with an adjacent nitrogen atom; and
R⁵ represents an optionally substituted hydrocarbon group;
A² represents, independently in each occurrence, a C₂-C₉ straight or branched chain alkylene group; and
n represents an integer of 1 to 50,
where, when n is 2 or more, "n" occurrences of A² may be identical or different.

3. The lactone polymer comprising a tertiary nitrogen atom and a polymerizable group according to claim 2,
wherein the compound (D) comprising a hydroxy-reactive functional group and a (meth)acryloyl group in a molecule comprises a compound selected from:
(D1) a (meth)acryloyl halide;
(D2) a (meth)acrylic ester;
(D3) a (meth)acrylic anhydride; and
(D4) a compound comprising an isocyanate group and a (meth)acryloyloxy group in a molecule.

4. A method for producing a lactone polymer comprising a tertiary nitrogen atom and a polymerizable group, the method comprising
allowing a compound (A) represented by Formula (1) to react with a polyisocyanate compound (B) and a hydroxy-containing (meth)acrylate compound (C), Formula (1) expressed as follows: 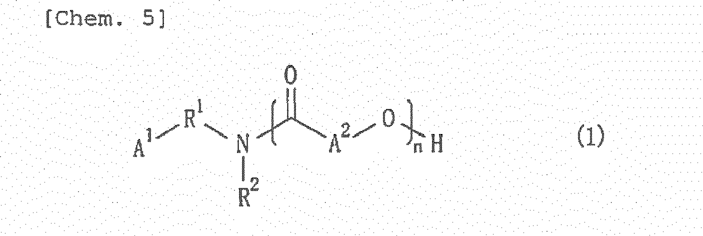 wherein:
R¹ represents an optionally substituted divalent hydrocarbon group;
R² is selected from a hydrogen atom and an optionally substituted hydrocarbon group, where R² and a carbon atom constituting R¹ may be linked to each other to form a ring with a nitrogen atom specified in the formula;
A¹ is selected from a nitrogen-containing heteroaromatic group and a group represented by one of Formulae (2) and (3) : 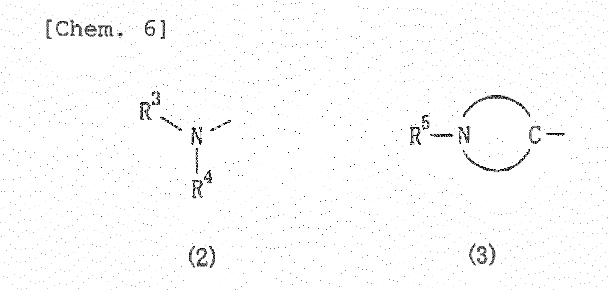 wherein:
R³ and R⁴ represent, identically or differently, an optionally substituted hydrocarbon group, where R³ and R⁹ may be linked to each other to form a ring with an adjacent nitrogen atom; and
R⁵ represents an optionally substituted hydrocarbon group;
A² represents, independently in each occurrence, a C₂-C₉ straight or branched chain alkylene group; and
n represents an integer of 1 to 50,
where, when n is 2 or more, "n" occurrences of A² may be identical or different.

5. A method for producing a lactone polymer comprising a tertiary nitrogen atom and a polymerizable group, the method comprising
allowing a compound (A) represented by Formula (1) to react with a compound (D) comprising a hydroxy-reactive functional group and a (meth)acryloyl group in a molecule, Formula (1) expressed as follows: 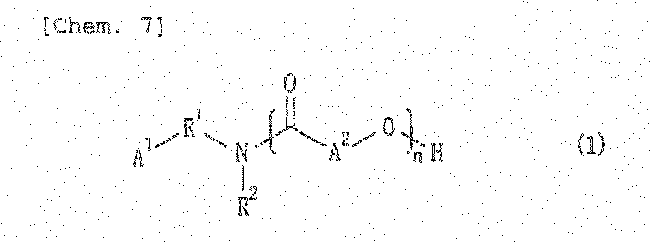 wherein:
R¹ represents an optionally substituted divalent hydrocarbon group;
R² is selected from a hydrogen atom and an optionally substituted hydrocarbon group, where R² and a carbon atom constituting R¹ may be linked to each other to form a ring with a nitrogen atom specified in the formula;
A¹ is selected from a nitrogen-containing heteroaromatic group and a group represented by one of Formulae (2) and (3) : 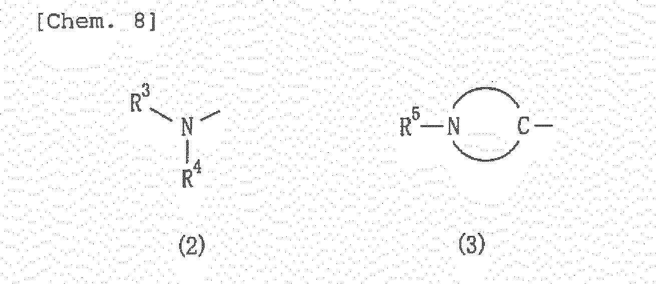 wherein:
R³ and R⁴ represent, identically or differently, an optionally substituted hydrocarbon group, where R³ and R⁴ may be linked to each other to form a ring with an adjacent nitrogen atom; and
R⁵ represents an optionally substituted hydrocarbon group;
A² represents, independently in each occurrence, a C₂-C₉ straight or branched chain alkylene group; and
n represents an integer of 1 to 50,
where, when n is 2 or more, "n" occurrences of A² may be identical or different.

6. A curable composition comprising
the lactone polymer comprising a tertiary nitrogen atom and a polymerizable group according to any one of claims 1 to 3.

7. The curable composition according to claim 6,
wherein the curable composition has a content of an amino compound or compounds excluding the lactone polymer comprising a tertiary nitrogen atom and a polymerizable group of 10 percent by weight or less relative to an amount of the lactone polymer comprising a tertiary nitrogen atom and a polymerizable group.

8. A tertiary-nitrogen-containing lactone polymer as an industrial product,
the lactone polymer being a tertiary-amine-terminated lactone polymer as an industrial product and comprising
90 percent by weight or more of a compound (A) represented by Formula (1),
the lactone polymer having a content of an amine compound represented by Formula (4) as an impurity of 1 percent by weight or less, Formula (1) expressed as follows: 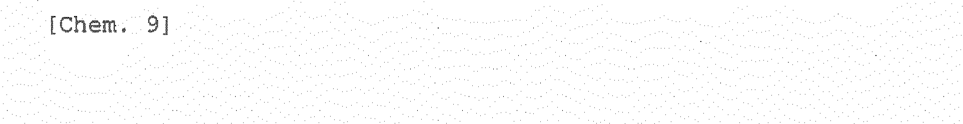 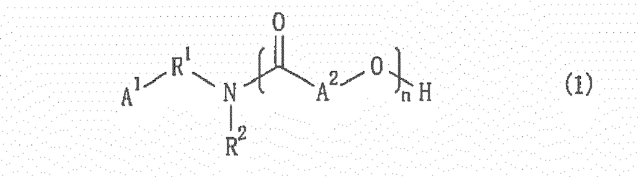 wherein:
R¹ represents an optionally substituted divalent hydrocarbon group;
R² is selected from a hydrogen atom and an optionally substituted hydrocarbon group, where R² and a carbon atom constituting R¹ may be linked to each other to form a ring with a nitrogen atom specified in the formula;
A¹ is selected from a nitrogen-containing heteroaromatic group and a group represented by one of Formulae (2) and (3) : 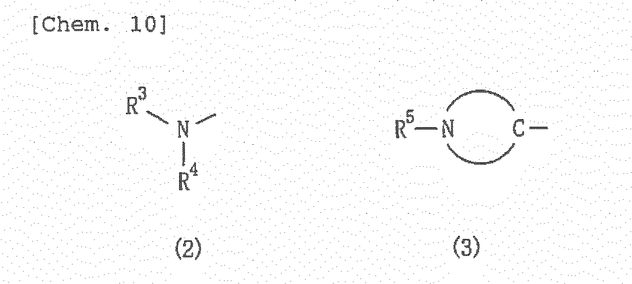 wherein:
R³ and R⁴ represent, identically or differently, an optionally substituted hydrocarbon group, where R³ and R⁴ may be linked to each other to form a ring with an adjacent nitrogen atom; and
R⁵ represents an optionally substituted hydrocarbon group;
A² represents, independently in each occurrence, a C₂-C₉ straight or branched chain alkylene group; and
n represents an integer of 1 to 50,
where, when n is 2 or more, "n" occurrences of A² may be identical or different,
Formula (4) expressed as follows: 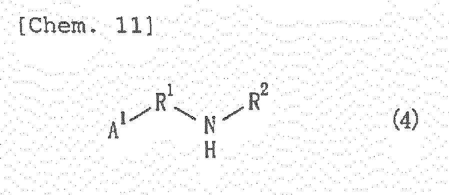
wherein R¹, R², and A¹ are as defined above.

9. The tertiary-nitrogen-containing lactone polymer as an industrial product according to claim 8,
wherein the lactone polymer is liquid at 25°C.

10. A method for producing a tertiary-nitrogen-containing lactone polymer, the method comprising
allowing an amine compound represented by Formula (4) to react with a lactone represented by Formula (5) in the absence of a catalyst to give a compound (A) represented by Formula (1), Formula (4) expressed as follows: 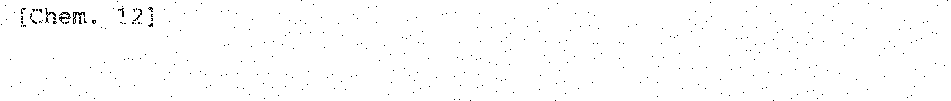 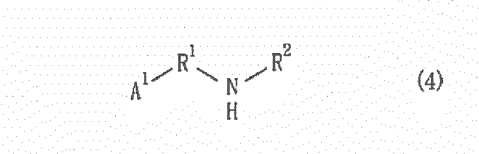 wherein:
R¹ represents an optionally substituted divalent hydrocarbon group;
R² is selected from a hydrogen atom and an optionally substituted hydrocarbon group, where R² and a carbon atom constituting R¹ may be linked to each other to form a ring with a nitrogen atom specified in the formula;
A¹ is selected from a nitrogen-containing heteroaromatic group and a group represented by one of Formulae (2) and (3) : 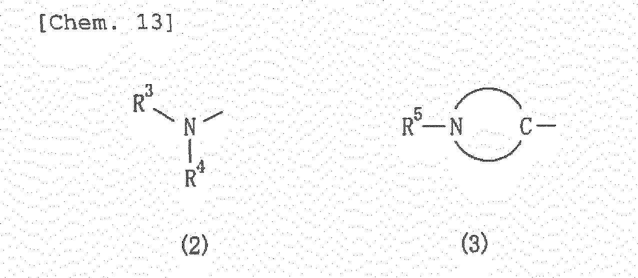 wherein:
R³ and R⁴ represent, identically or differently, an optionally substituted hydrocarbon group, where R³ and R⁴ may be linked to each other to form a ring with an adjacent nitrogen atom; and
R⁵ represents an optionally substituted hydrocarbon group,
Formula (5) expressed as follows: 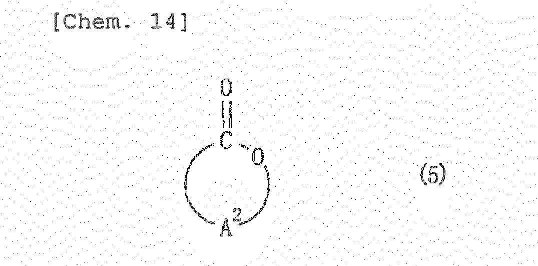 wherein A² represents a C₂-C₉ straight or branched chain alkylene group,
Formula (1) expressed as follows: 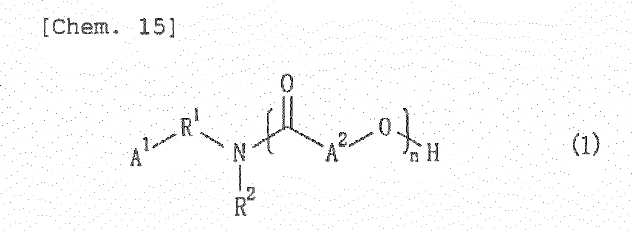 wherein:
R¹, R², A¹, and A² are as defined above; and
n represents an integer of 1 to 50,
where, when n is 2 or more, "n" occurrences of A² may be identical or different.
